# EUROPÄISCHE PATENTSCHRIFT

(11) **EP 2 906 842 B1**
(45) Veröffentlichungstag und Bekanntmachung des Hinweises auf die Patenterteilung: **30.11.2016**
(21) Anmeldenummer: 13776948.5
(22) Anmeldetag: 18.09.2013
(51) Int. Cl.: F16C 33/36, F16C 33/46, F16C 33/54, F16C 19/26

(54) **KUGELROLLENLAGER**
BALL ROLLER BEARING
ROULEMENT À ROULEAUX SPHÉRIQUES

(30) Priorität: 10.10.2012 DE 102012218409
(43) Veröffentlichungstag der Anmeldung: 19.08.2015
(73) Patentinhaber: Schaeffler Technologies AG & Co. KG, 91074 Herzogenaurach (DE)
(72) Erfinder: GEIGER, Ernst, 91352 Hallerndorf (DE); WIRTH, Werner, 91466 Gerhardshofen (DE); WEBER, Otmar, 96178 Pommersfelden (DE); FACKELMANN, Robert, 90766 Fürth (DE)
(86) Internationale Anmeldenummer: PCT/DE2013/200180
(87) Internationale Veröffentlichungsnummer: WO 2014/056497

(56) Entgegenhaltungen:
- DE-A1-102008 016 977
- DE-A1-102008 037 075
- DE-A1-102009 014 169
- DE-A1-102009 042 076
- JP-A- 2006 077 801

## Beschreibung

### Gebiet der Erfindung

Die Erfindung betrifft ein einreihiges Kugelrollenlager nach den oberbegriffsbildenden Merkmalen des Patentanspruchs 1, welches beispielsweise besonders vorteilhaft als Festlager für die Antriebs- oder Abtriebswelle eines Kfz-Schalt-getriebes einsetzbar ist.

### Hintergrund der Erfindung

Kugelrollenlager sind Wälzlager mit speziellen, als Kugelrollen ausgebildeten Wälzkörpern, die ausgehend von einer Kugelgrundform jeweils zwei von dieser Kugelgrundform abgeflachte, parallel zueinander angeordnete Seitenflächen aufweisen, zwischen denen jeweils die Laufflächen der Kugelrollen angeordnet sind. Derartige Kugelrollenlager sind in den verschiedensten Ausführungen als ein-, zwei-, drei oder auch vierreihige Radial- oder Schräg-Kugelrollenlager allgemein bekannt und benötigen durch die spezielle Wälzkörperform auch spezielle Käfigausführungen, um einerseits eine maximal zulässige Axialverkippung der Kugelrollen relativ zur Lagersenkrechten zu begrenzen sowie andererseits ein Taumeln der Kugelrollen quer zu ihrer Umlaufrichtung zu vermeiden.

Ein gattungsbildendes einreihiges Kugelrollenlager ist beispielsweise aus der DE 10 2009 042 076 A1, das die Merkmale des Oberbegriffs des Anspruchs 1 offenbart, vorbekannt und besteht im Wesentlichen aus einem äußeren Lagerring und einem inneren Lagerring sowie aus einer Vielzahl zwischen diesen Lagerringen angeordneter Kugelrollen, die mit ihren Laufflächen in zwei in die Innenseite des äußeren Lagerrings und in die Außenseite des inneren Lagerrings eingearbeitete rillenförmigen Laufbahnen abrollen und innerhalb einzelner Käfigtaschen eines Lagerkäfigs in Umfangsrichtung in gleichmäßigen Abständen zueinander gehalten werden. Dieser Lagerkäfig ist mit zwei durch mehrere profilierte Taschenstege miteinander verbundenen Seitenringen und zwei mit diesen Seitenringen verbundenen Käfigborden ausgebildet, die um zwei umlaufende Bördelkanten mit verringerter Materialstärke zum inneren Lagerring abgebogenen sind und zur Axialführung der Kugelrollen mit deren Seitenflächen in Führungskontakt stehen. Zur Herstellung eines solchen Lagerkäfigs wird in der Regel ein Blechband aus einem kaltumformbaren Tiefziehstahl verwendet, das durch Profilieren der Käfigborde, Stanzen der Käfigtaschen, Profilieren der Taschenstege, Ablängen auf Umfangsmaß, Einrollen zu einem Ring und Verschweißen der Ringenden endbearbeitet wird.

In der Praxis hat es sich jedoch gezeigt, dass die Herstellung des Lagerkäfigs in der beschriebenen Form mit speziellen technischen Problemen behaftet ist und der Lagerkäfig auch qualitativ nicht den gestellten Anforderungen voll entspricht. Dies hängt vor allem mit den an das Blechband anprofilierten Käfigborden zusammen, durch die es beim Einrollen des Käfigs zu einem Ring zu Materialeinschnürungen kommt, die ursächlich dafür sind, dass die Käfigborde keine glatte und ebene sondern eine gewellte Oberfläche aufweisen. Darüber hinaus kommt es im Lagerbetrieb an den Kontaktstellen der Seitenflächen der Kugelrollen mit den Käfigborden durch Materialverdrängung und Materialabtrag zu einem verstärkten Verschleiß an den Käfigborden, durch den die Kugelrollen beidseitig axial nicht mehr ordnungsgemäß geführt werden und somit zu verstärkten Taumel- und Schlingerbewegungen neigen. In Folge dieser Taumel- und Schlingerbewegungen der Kugelrollen kommt es dann zu einer erhöhten Reibung und einer erhöhten Lagertemperatur, die mit einem verstärkten Lagerverschleiß einher geht und schließlich zum Ausfall des Kugelrollenlagers führt.

### Aufgabe der Erfindung

Ausgehend von den dargelegten Nachteilen des bekannten Standes der Technik liegt der Erfindung deshalb die Aufgabe zu Grunde, ein Kugelrollenlager zu konzipieren, dessen Lagerkäfig konstruktiv so gestaltet ist, dass dessen Käfigborde eine glatte Oberfläche aufweisen und verschleißfest ausgebildet sind.

### Beschreibung der Erfindung

Erfindungsgemäß wird diese Aufgabe bei einem Kugelrollenlager nach dem Oberbegriff des Anspruchs 1 derart gelöst, dass der Lagerkäfig einen aus den Seitenringen und den Taschenstegen bestehenden zylindrischen Grundkörper aus einem kaltumformbaren Tiefziehstahl aufweist und die Käfigborde durch zwei separate Bordringe aus einem wärmebehandelten Kohlenstoffstahl gebildet werden, die mit dem Grundkörper kraft- und/oder formschlüssig verbunden sind.

Bevorzugte Ausgestaltungen und vorteilhafte Weiterbildungen des erfindungsgemäß ausgebildeten Kugelrollenlagers werden in den Unteransprüchen 2 bis 8 genannt und nachfolgend beschrieben.

Danach ist es gemäß Anspruch 2 bei dem erfindungsgemäß ausgebildeten Kugelrollenlager vorgesehen, dass die beiden separaten Bordringe identisch ausgebildet sind und einen V-förmigen Profilquerschnitt aufweisen, bei dem jeweils ein Profilschenkel als längerer Befestigungsschenkel ausgebildet ist, über den die Bordringe mit dem Grundkörper des Lagerkäfigs verbunden werden. Der andere Profilschenkel der Bordringe ist dagegen als kürzerer Anschlagschenkel ausgebildet, der in einem stumpfen Winkel von ca. 150° zum Befestigungsschenkel angeordnet ist und einen Axialanschlag für die Kugelrollen bildet.

Nach Anspruch 3 ist es ein weiteres Merkmal des erfindungsgemäß ausgebildeten Kugelrollenlagers, dass die Befestigungsschenkel der Bordringe jeweils in Höhe der Taschenstege des Grundkörpers rechteckförmige Ausklinkungen aus deren Außenumfang aufweisen und dadurch jeweils in Höhe der Käfigtaschen mit gleichmäßig umfangsverteilten Zahnsegmenten ausgebildet sind. Die Ausbildung der Bordringe mit solchen Zahnsegmenten und Ausklinkungen an deren Befestigungsschenkeln hat sich dabei dahingehend als vorteilhaft erwiesen, dass durch die Zahnsegmente die elastische Federwirkung der Bordscheiben bei der Führung der Kugelrollen erhöht wird und gleichzeitig über die Ausklinkungen die Schmiermittelverteilung im Kugelrollenlager verbessert wird.

Eine zweckmäßige Weiterbildung des erfindungsgemäß ausgebildeten Kugelrollenlagers ist es nach den Ansprüchen 4 und 5 desweiteren, dass in die Innendurchmesserseiten der Seitenringe des Grundkörpers zwei umlaufenden Nuten eingearbeitet sind, in welche die Zahnsegmente der Bordringe einschnappbar sind und dass die freien Enden der Zahnsegmente der Befestigungsschenkel mit scharfen Kanten ausgebildet sind, mit denen ein selbstständigen Herausfallens der Bordringe aus den Nuten in den Seitenringen des Grundkörpers unter Last verhindert werden soll. Die Nuten werden dabei bevorzugt in die taschenseitige Kante der Innendurchmesserseiten der Seitenringe eingerollt, während die scharfen Kanten an den freien Enden der Zahnsegmente durch einen nachträglichen Beschneidevorgang hergestellt werden.

Ein weiteres Merkmal des erfindungsgemäß ausgebildeten Kugelrollenlagers ist es nach Anspruch 6, dass der Übergang von den Befestigungsschenkeln zu den Anschlagschenkeln der Bordringe jeweils durch eine Verrundung gebildet wird. Die radiale Länge des Befestigungsschenkels an jedem Bordring ist dabei so gewählt, dass diese Verrundung im Lagerbetrieb genau in Höhe der Rollachsen der Kugelrollen angeordnet ist und somit genau mittig mit deren Seitenflächen in Führungskontakt steht. Dadurch wird ein längstmöglicher Linienkontakt zwischen den Bordringen und den Kugelrollen erreicht, durch den Taumelbewegungen der Kugelrollen in Umfangsrichtung vermieden werden.

Darüber hinaus zeichnet sich das erfindungsgemäß ausgebildete Kugelrollenlager gemäß Anspruch 7 noch dadurch aus, dass jeweils ein Befestigungsschenkel des einen Bordrings und ein Anschlagschenkel des anderen Bordrings als Anlagefläche für die Seitenflächen der Kugelrollen zur Begrenzung einer maximal zulässige Axialverkippung der Kugelrollen von ca. 15° beidseitig der Lagersenkrechten ausgebildet ist. Das bedeutet, dass bei einer Axialverkippung der Kugelrollen von 15° nach der einen oder anderen Axialseite die eine Seitenfläche jeder Kugelrolle am Befestigungsschenkel des einen Bordrings und die andere Seitenfläche jeder Kugelrolle am Anschlagschenkel des anderen Bordrings flächig zu Anlage kommt und dadurch ein Herauskippen der Kugelrollen aus ihren Laufbahnen verhindert wird.

Schließlich wird es als vorteilhafte Ausgestaltung des erfindungsgemäß ausgebildeten Kugelrollenlagers durch Anspruch 8 noch vorgeschlagen, dass die Bordringe des Lagerkäfigs bevorzugt aus einem Kohlenstoffstahl der Sorte CK 45 M (DIN Werkstoff-Nr.: 1.1191) oder CK 75 M (DIN Werkstoff-Nr.: 1.7222) bestehen und spanlos durch Stanzpressen aus einem Bandmaterial sowie anschließendem Härten hergestellt sind. Diese Stahlsorten sind relativ preiswerte ungehärtete Federstähle, die im allgemeinen Maschinen- und Fahrzeugbau häufig zur Anwendung kommen und sich trotz ihren hohen Kohlenstoffgehalts durch eine hohe Elastizität und gute mechanische Verarbeitungseigenschaften auszeichnen. Denkbar wäre es jedoch auch, die Bordringe aus anderen hoch elastischen Federstahlsorten wie beispielsweise 38Si7 (DIN Werkstoff-Nr.: 1.5023) oder 51CrV4 (DIN Werkstoff-Nr.: 1.8159) herzustellen, wobei jedoch Abstriche bei deren mechanischer Verarbeitung zu machen sind.

Zusammenfassend weist das erfingdungsgemäß ausgebildete Kugelrollenlager somit gegenüber den aus dem Stand der Technik bekannten Kugelrollenlagern den Vorteil auf, dass es anstelle eines einteiligen Lagerkäfigs nunmehr einen dreiteiligen Lagerkäfig in Differenzialbauweise aufweist, der aus einem zylindrischen Grundkörper aus einem kaltumformbaren Tiefziehstahl und aus zwei separaten Bordringen aus einem wärmebehandelten Kohlenstoffstahl besteht. Dadurch wird zum einen die Herstellung des Lagerkäfigs wesentlich erleichtert, da der Grundkörper keine anprofilierte Käfigborde mehr aufweist, durch die es beim Einrollen des Käfigs zu einem Ring zu Materialeinschnürungen bzw. zu Käfigborden mit gewellten Oberflächen kommt. Zum anderen gewährleisten die gehärteten Bordringe, dass es im Lagerbetrieb an den Kontaktstellen der Seitenflächen der Kugelrollen mit den Bordringen nicht mehr zu einem Verschleiß an den Käfigborden kommt, durch den die Kugelrollen beidseitig axial nicht mehr ordnungsgemäß geführt werden. Zusätzlich ist durch die V-förmige Profilierung und durch die Elastizität der Bordscheiben gewährleistet, dass die Kugelrollen auch in der lastfreien Zone eng geführt sowie beim Eintreten und Verlassen der Lastzone und beim Einschwenken in den jeweiligen Druckwinkel axial gestützt werden, so dass Verschleiß verursachende Taumel- und Schlingerbewegungen nicht mehr oder nur noch in geringem Maße auftreten können.

### Kurze Beschreibung der Zeichnungen

Eine bevorzugte Ausführungsform des erfindungsgemäß ausgebildeten Kugelrollenlagers wird nachfolgend unter Bezugnahme auf die beigefügten Zeichnungen näher erläutert. Dabei zeigen:
- Figur 1: eine Darstellung eines Querschnittes durch ein erfindungsgemäß ausgebildetes Kugelrollenlager;
- Figur 2: eine vergrößerte Darstellung der Einzelheit X des erfindungsgemäß ausgebildeten Kugelrollenlager gemäß Figur 1;
- Figur 3: eine räumliche Darstellung des Grundkörpers des Lagerkäfigs des erfindungsgemäß ausgebildeten Kugelrollenlagers;
- Figur 4: eine räumliche Darstellung eines Bordrings des Lagerkäfigs des erfindungsgemäß ausgebildeten Kugelrollenlagers.

### Ausführliche Beschreibung der Zeichnungen

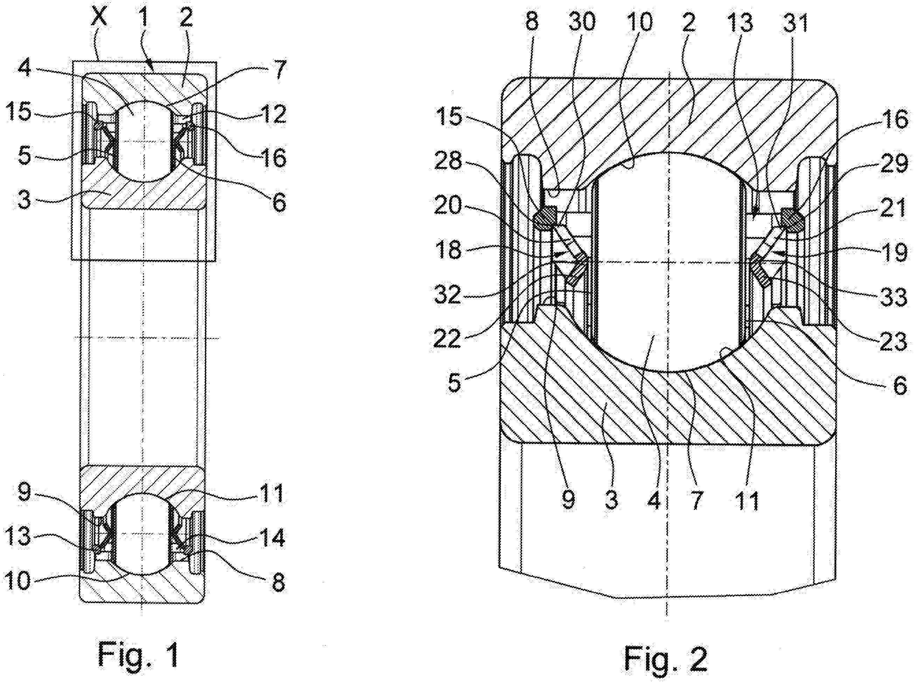

Aus den Figuren 1 und 2 geht deutlich ein einreihiges Kugelrollenlager 1 hervor, welches im Wesentlichen aus einem äußeren Lagerring 2 und einem inneren Lagerring 3 sowie aus einer Vielzahl zwischen diesen Lagerringen 2, 3 angeordneter und mit jeweils zwei von einer Kugelgrundform abgeflachten, parallelen Seitenflächen 5, 6 ausgebildeten Kugelrollen 4 besteht, die mit ihren zwischen den Seitenflächen 5, 6 verlaufenden Laufflächen 7 in zwei in die Innenseite 8 des äußeren Lagerrings 2 und in die Außenseite 9 des inneren Lagerrings 3 eingearbeitete rillenförmigen Laufbahnen 10, 11 abrollen und innerhalb einzelner Käfigtaschen 12 eines Lagerkäfigs 13 in Umfangsrichtung in gleichmäßigen Abständen zueinander gehalten werden. Der Lagerkäfig 13 weist dabei zwei durch mehrere Taschenstege 14 miteinander verbundene Seitenringe 15, 16 und zwei mit diesen Seitenringen 15, 16 verbundene sowie zum inneren Lagerring 3 weisende Käfigborde auf, die zur Axialführung der Kugelrollen 4 mit deren Seitenflächen 5, 6 in Führungskontakt stehen.

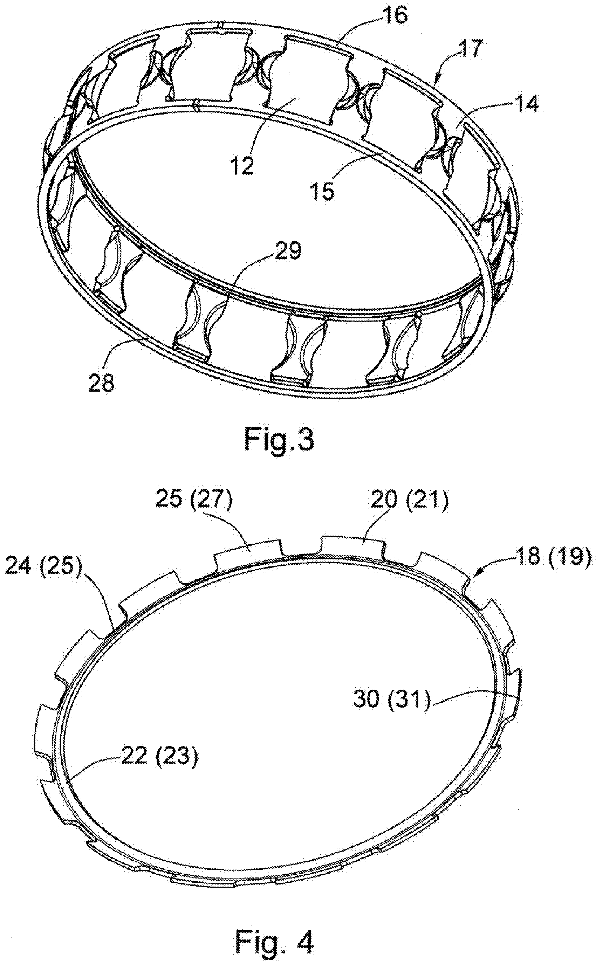

Aus den Figuren 3 und 4 wird desweiteren deutlich, dass der Lagerkäfig 13 des Kugelrollenlagers 1 zur Erleichterung seiner Herstellung sowie zur Vermeidung von Verschleiß an den Käfigborden erfindungsgemäß einen aus den Seitenringen 15, 16 und den Taschenstegen 14 bestehenden zylindrischen Grundkörper 17 aus einem kaltumformbaren Tiefziehstahl aufweist und dass die Käfigborde durch zwei separate Bordringe 18, 19 gebildet werden, die, wie in Figur 2 gezeigt, mit dem Grundkörper 17 kraft- und/ oder formschlüssig verbunden sind. Die beiden identisch ausgebildeten, spanlos durch Stanzpressen und anschließendem Härten hergestellten separaten Bordringe 18, 19 bestehen dabei aus einem Kohlenstoffstahl der Sorte CK 45 M oder CK 75 M und weisen einen V-förmigen Profilquerschnitt auf, der durch jeweils einen längeren Befestigungsschenkel 20, 21 und jeweils einen in einem stumpfen Winkel von ca. 150° zu diesem angeordneten kürzeren Anschlagschenkel 22, 23 gebildet wird.

Darüber hinaus ist in den Figuren 3 und 4 zu sehen, dass die Befestigungsschenkel 20, 21 der Bordringe 18, 19 durch rechteckförmige Ausklinkungen 24, 25 aus deren Außenumfang jeweils in Höhe der Taschenstege 14 des Grundkörpers 17 mit gleichmäßig umfangsverteilten Zahnsegmenten 26, 27 in Höhe der Käfigtaschen 12 ausgebildet sind und dass in die Innendurchmesserseiten der Seitenringe 15, 16 des Grundkörpers 17 zwei umlaufenden Nuten 28, 29 eingearbeitet sind, in welche die Zahnsegmente 26, 27 der Bordringe 18, 19 einschnappbar sind. Die Zahnsegmente 26, 27 erhöhen dabei die elastische Federwirkung der Bordringe 18, 19 bei der Führung der Kugelrollen, während die Ausklinkungen die Schmiermittelverteilung im Kugelrollenlager 1 verbessern. Zusätzlich sind die freien Enden der Zahnsegmente 26, 27 der Befestigungsschenkel 20, 21 mit scharfen Kanten 30, 31 ausgebildet, mit denen ein selbstständigen Herausfallens der Bordringe 18, 19 aus den Nuten 28, 29 in den Seitenringen 15, 16 des Grundkörpers 17 unter Last verhindert wird.

Schließlich geht aus Figur 2 noch hervor, dass der Übergang von den Befestigungsschenkeln 20, 21 zu den Anschlagschenkeln 22, 23 der Bordringe 18, 19 jeweils durch eine Verrundung 32, 33 gebildet wird, die im Lagerbetrieb in Höhe der Rollachsen der Kugelrollen 4 mit deren Seitenflächen 5, 6 in Führungskontakt steht und somit einen längstmöglichen Linienkontakt zwischen den Bordringen 18, 19 und den Kugelrollen 4 gewährleistet, durch den Taumelbewegungen der Kugelrollen 4 in Umfangsrichtung vermieden werden. Ebenso ist in Figur 2 gezeigt, dass jeweils ein Befestigungsschenkel 20 oder 21 des einen Bordrings 18 oder 19 und ein Anschlagschenkel 22 oder 23 des anderen Bordrings 19 oder 18 als Anlagefläche für die Seitenflächen 5, 6 der Kugelrollen 4 ausgebildet und zur Begrenzung einer maximal zulässige Axialverkippung der Kugelrollen 4 von ca. 15° beidseitig der Lagersenkrechten vorgesehen ist. Dabei kommt bei einer Axialverkippung der Kugelrollen von 15° nach der einen Axialseite die Seitenfläche 5, jeder Kugelrolle 4 am Befestigungsschenkel 21 des Bordrings 19 und die Seitenfläche 6 jeder Kugelrolle 4 am Anschlagschenkel 22 des Bordrings 18 bzw. bei einer Axialverkippung der Kugelrollen von 15° nach der anderen Axialseite die Seitenfläche 5 jeder Kugelrolle 4 am Befestigungsschenkel 20 des Bordrings 18 und die Seitenfläche 6 jeder Kugelrolle 4 am Anschlagschenkel 22 des Bordrings 19 flächig zu Anlage und verhindert somit ein Herauskippen der Kugelrollen 4 aus ihren Laufbahnen 10, 11.

### Bezugszahlenliste

| | | | |
|---|---|---|---|
| 1 | Kugelrollenlager | 18 | Bordring an 13 |
| 2 | äußerer Lagerring | 19 | Bordring an 13 |
| 3 | innerer Lagerring | 20 | Befestigungsschenkel von 18 |
| 4 | Kugelrollen | 21 | Befestigungsschenkel von 19 |
| 5 | Seitenflächen von 4 | 22 | Anschlagschenkel von 18 |
| 6 | Seitenflächen von 4 | 23 | Anschlagschenkel von 19 |
| 7 | Laufflächen von 4 | 24 | Ausklinkungen in 20 |
| 8 | Innenseite von 2 | 25 | Ausklinkungen in 21 |
| 9 | Außenseite von 3 | 26 | Zahnsegmente an 20 |
| 10 | Laufbahn in 8 | 27 | Zahnsegmente an 21 |
| 11 | Laufbahn in 9 | 28 | Nut in 15 |
| 12 | Käfigtaschen in 13 | 29 | Nut in 16 |
| 13 | Lagerkäfig | 30 | scharfe Kanten an 26 |
| 14 | Taschenstege von 13 | 31 | scharfe Kanten an 27 |
| 15 | Seitenring von 13 | 32 | Verrundung an 18 |
| 16 | Seitenring von 13 | 33 | Verrundung an 19 |
| 17 | Grundkörper von 13 | | |

## Patentansprüche

1. Kugelrollenlager (1), im Wesentlichen bestehend aus einem äußeren Lagerring (2) und einem inneren Lagerring (3) sowie aus einer Vielzahl zwischen diesen Lagerringen (2, 3) angeordneter Kugelrollen (4) mit jeweils zwei parallelen Seitenflächen (5, 6), die mit ihren zwischen den Seitenflächen (5, 6) verlaufenden Laufflächen (7) in zwei in die Innenseite (8) des äußeren Lagerrings (2) und in die Außenseite (9) des inneren Lagerrings (3) eingearbeitete rillenförmigen Laufbahnen (10, 11) abrollen und innerhalb einzelner Käfigtaschen (12) eines Lagerkäfigs (13) in Umfangsrichtung in gleichmäßigen Abständen zueinander gehalten werden, wobei der Lagerkäfig (13) zwei durch mehrere Taschenstege (14) miteinander verbundene Seitenringe (15, 16) und zwei mit diesen Seltenringen (15, 16) verbundene sowie zum inneren Lagerring (3) weisenden Käfigborde aufweist, die zur Axialführung der Kugelrollen (4) mit deren Seitenflächen (5, 6) in Führungskontakt stehen, **dadurch gekennzeichnet, dass** der Lagerkäfig (13) einen aus den Seitenringen (15, 16) und den Taschenstegen (14) bestehenden zylindrischen Grundkörper (17) aus einem kaltumformbaren Tiefziehstahl aufweist und die Käfigborbe durch zwei separate Bordringe (18, 19) aus einem wärmebehandelten Kohlenstoffstahl gebildet werden, die mit dem Grundkörper (17) kraft- und/oder formschlüssig verbunden sind.

2. Kugelrollenlager nach Anspruch 1, **dadurch gekennzeichnet, dass** die beiden separaten Bordringe (18, 19) identisch ausgebildet sind und einen V-förmigen Profilquersebnitt mit jeweils einem längeren Befestigungsschenkel (20, 21) und einem kürzeren Anschlagschenkel (22, 23) aufweisen, die in einem stumpfen Winkel von ca. 150° zueinander angeordnet sind.

3. Kugelrellenlager nach Anspruch 2, **dadurch gekennzeichnet, dass** die Befestigungsschenkel (20, 21) der Bördringe (18, 19) durch rechteckförmige Ausklinkungen (24, 25) aus deren Außenumfang jeweils in Höhe der Taschenstege (14) des Grundkörpers (17) mit gleichmäßig umfangsverteilten Zahnsegmenten (26, 27) in Höhe der Käfigtaschen (12) ausgebildet sind.

4. Kugelrollenlager nach Anspruch 3, **dadurch gekennzeichnet, dass** in die Innendurchmesserseiten der Seitenringe (15, 16) des Grundkörpers (17) zwei umlaufenden Nuten (28, 29) eingearbeitet sind, in welche die Zahnsegmente (26, 27) der Bordringe (18, 19) einschnappbar sind.

5. Kugelrollenlager nach Anspruch 4, **dadurch gekennzeichnet, dass** die freien Enden der Zahnsegmente (26, 27) der Befestigimgssehenkel (20, 21) mit scharfen Kanten (30, 31) zum Verhindern eines selbstständigen Herausfallens der Bordringe (18, 19) aus den Nuten (28, 29) in den Seitenringen (15, 16) des Grundkörpers (17) unter Last ausgebildet sind.

6. Kugelrollenlager nach Anspruch 2, **dadurch gekennzeichnet, dass** der Übergang von den Befestigungsschenkeln (20, 21) zu den Anschlagschenkeln (22, 23) der Bordringe (18, 19) jeweils durch eine Verrundung (32, 33) gebildet wird, die im Lagerbetrieb in Höhe der Rollachsen der Kugelrollen (4) mit deren Seitenflächen (5, 6) in Führungskontakt steht.

7. Kugelrollenlager nach Anspruch 6, **dadurch gekennzeichnet, dass** jeweils ein Befestigungsschenkel (20 oder 21) des einen Bordrings (18 oder 19) und ein Anschlagschenkel (22 oder 23) des anderen Bordrings (19 oder 18) als Anlageflache für die Seitenflächen (5, 6) der Kugelrollen (4) zur Begrenzung einer maximal zulässige Axialverkippung der Kugelrollen (4) von ca. 15° beidseitig der Lagersenkrechten ausgebildet ist.

8. Kugelrollenlager nach Anspruch 6, **dadurch gekennzeichnet, dass** die Bordringe (18, 19) des Lagerkäfigs (13) bevorzugt aus einem Kohlenstoffstahl der Sorte CK 45 M (DIN Werkstoff-Nr.: 1.1191) oder CK 75 M (DIN Werkstoff-Nr.: 1.7222) bestehen und spanlos durch Stanzpressen aus einem Bandmaterial sowie anschließendem Härten hergestellt sind.

## Claims

1. Spherical roller bearing (1), consisting substantially of an outer bearing ring (2) and an inner bearing ring (3), and a multiplicity of spherical rollers (4) which are arranged between the said bearing rings (2, 3) with in each case two parallel side faces (5, 6) which roll with their running faces (7) which run between the side faces (5, 6) in two groove-shaped raceways (10, 11) which are machined into the inner side (8) of the outer bearing ring (2) and into the outer side (9) of the inner bearing ring (3), and are held at uniform spacings from one another in the circumferential direction within individual cage pockets (12) of a bearing cage (13), the bearing cage (13) having two side rings (15, 16) which are connected to one another by way of a plurality of pocket webs (14) and two cage rims which are connected to the said side rings (15, 16) and point towards the inner bearing ring (3) and, for axial guidance of the spherical rollers (4), are in guide contact with their side faces (5, 6), **characterized in that** the bearing cage (13) has a cylindrical main body (17) which consists of the side rings (15, 16) and the pocket webs (14) and is made from cold-workable deep-drawn steel, and the cage rims are formed by two separate rim rings (18, 19) which are made from a heat-treated carbon steel and are connected to the main body (17) in a non-positive and/or positively locking manner.

2. Spherical roller bearing according to Claim 1, **characterized in that** the two separate rim rings (18, 19) are of identical configuration and have a V-shaped profile cross section with in each case one longer fastening limb (20, 21) and one shorter stop limb (22, 23) which are arranged at an obtuse angle of approximately 150° with respect to one another.

3. Spherical roller bearing according to Claim 2, **characterized in that** the fastening limbs (20, 21) of the rim rings (18, 19) are configured by way of rectangular notches (24, 25) from their outer circumference in each case at the level of the pocket webs (14) of the main body (17) with uniformly circumferentially distributed tooth segments (26, 27) at the level of the cage pockets (12).

4. Spherical roller bearing according to Claim 3, **characterized in that** two circumferential channels (28, 29) are machined into the internal diameter sides of the side rings (15, 16) of the main body (17), into which channels (28, 29) the tooth segments (26, 27) of the rim rings (18, 19) can be snapped.

5. Spherical roller bearing according to Claim 4, **characterized in that** the free ends of the tooth segments (26, 27) of the fastening limbs (20, 21) are configured with sharp edges (30, 31) for preventing independent falling of the rim rings (18, 19) out of the channels (28, 29) in the side rings (15, 16) of the main body (17) under load.

6. Spherical roller bearing according to Claim 2, **characterized in that** the transition from the fastening limbs (20, 21) to the stop limbs (22, 23) of the rim rings (18, 19) is formed in each case by way of a rounded portion (32, 33) which is in guide contact at the level of the rolling axes of the spherical rollers (4) with the side faces (5, 6) of the said spherical rollers (4) during bearing operation.

7. Spherical roller bearing according to Claim 6, **characterized in that** in each case one fastening limb (20 or 21) of the one rim ring (18 or 19) and one stop limb (22 or 23) of the other rim ring (19 or 18) are configured as a bearing face for the side faces (5, 6) of the spherical rollers (4) in order to limit a maximum permissible axial tilting of the spherical rollers (4) of approximately 15° on both sides of the bearing perpendicular.

8. Spherical roller bearing according to Claim 6, **characterized in that** the rim rings (18, 19) of the bearing cage (13) preferably consist of a carbon steel of the CK 45 M type (DIN material no.: 1.1191) or CK 75 M type (DIN material no.: 1.7222) and are produced in a chipless manner by way of punch pressing from a strip material and subsequent hardening.

## Revendications

1. Palier à rouleaux sphériques (1), constitué substantiellement d'une bague de palier extérieure (2) et d'une bague de palier intérieure (3) ainsi que d'une pluralité de rouleaux sphériques (4) disposés entre ces bagues de palier (2, 3) avec à chaque fois deux surfaces latérales parallèles (5, 6) qui roulent avec leurs surfaces de roulement (7) s'étendant entre les surfaces latérales (5, 6) dans deux chemins de roulement (10, 11) en forme de rainure réalisés dans le côté intérieur (8) de la bague de palier extérieure (2) et dans le côté extérieur (9) de la bague de palier intérieure (3) et qui sont retenus à intervalles réguliers les uns des autres dans la direction périphérique à l'intérieur de cavités de cage individuelles (12) d'une cage de palier (13), la cage de palier (13) présentant deux bagues latérales (15, 16) connectées l'une à l'autre par plusieurs nervures de cavité (14) et deux bords de cage connectés à ces bagues latérales (15, 16) et tournés vers la bague de palier intérieure (3), qui sont en contact de guidage en vue du guidage axial des rouleaux sphériques (4) avec leurs surfaces latérales (5, 6), **caractérisé en ce que** la cage de palier (13) présente un corps de base cylindrique (17) constitué des bagues latérales (15, 16) et des nervures de cavité (14) en un acier embouti profond pouvant être déformé à froid et les bords de cage sont formés par deux bagues de bord séparées (18, 19) en un acier au carbone traité à chaud, lesquelles sont connectées au corps de base (17) par engagement par correspondance de formes et/ou par force.

2. Palier à rouleaux sphériques selon la revendication 1, **caractérisé en ce que** les deux bagues de bord séparées (18, 19) sont réalisées de manière identique et présentent un profil en section transversale en forme de V avec à chaque fois une branche de fixation plus longue (20, 21) et une branche de butée plus courte (22, 23), qui sont disposées suivant un angle obtus d'environ 150° l'une par rapport à l'autre.

3. Palier à rouleaux sphériques selon la revendication 2, **caractérisé en ce que** les branches de fixation (20, 21) des bagues de bord (18, 19) sont réalisées par des entailles rectangulaires (24, 25) dans leur périphérie extérieure à chaque fois à la hauteur des nervures de cavité (14) du corps de base (17) avec des segments dentés (26, 27) répartis uniformément sur la périphérie à la hauteur des cavités de cage (12).

4. Palier à rouleaux sphériques selon la revendication 3, **caractérisé en ce que** deux rainures périphériques (28, 29) sont réalisées dans les côtés de diamètre intérieur des bagues latérales (15, 16) du corps de base (17), dans lesquelles rainures peuvent être encliquetés les segments dentés (26, 27) des bagues de bord (18, 19).

5. Palier à rouleaux sphériques selon la revendication 4, **caractérisé en ce que** les extrémités libres des segments dentés (26, 27) des branches de fixation (20, 21) sont réalisées avec des arêtes vives (30, 31) pour empêcher que les bagues de bord (18, 19) ne ressortent automatiquement des rainures (28, 29) dans les bagues latérales (15, 16) du corps de base (17) sous l'application d'une charge.

6. Palier à rouleaux sphériques selon la revendication 2, **caractérisé en ce que** la transition des branches de fixation (20, 21) aux branches de butée (22, 23) des bagues de bord (18, 19) est à chaque fois réalisée par un arrondi (32, 33) qui est en contact de guidage pendant le fonctionnement du palier avec les surfaces latérales (5, 6) de celui-ci à la hauteur des axes de rouleau des rouleaux sphériques (4).

7. Palier à rouleaux sphériques selon la revendication 6, **caractérisé en ce qu'**à chaque fois une branche de fixation (20 ou 21) de l'une des bagues de bord (18 ou 19) et une branche de butée (22 ou 23) de l'autre bague de bord (19 ou 18) est réalisée sous forme de surface de butée pour les surfaces latérales (5, 6) des rouleaux sphériques (4) pour limiter un basculement axial maximal admissible des rouleaux sphériques (4) d'environ 15° de chaque côté de la perpendiculaire au palier.

8. Palier à rouleaux sphériques selon la revendication 6, **caractérisé en ce que** les bagues de bord (18, 19) de la cage de palier (13) se composent de préférence d'un acier au carbone de type CK 45 M (DIN matériau numéro : 1.1191) ou CK 75 M (DIN matériau numéro : 1.7222) et sont fabriquées par usinage sans enlèvement de copeaux par filage à partir d'un matériau en bande, suivi d'un durcissement.
